# EUROPÄISCHE PATENTSCHRIFT

(11) **EP 2 564 947 B1**
(45) Veröffentlichungstag und Bekanntmachung des Hinweises auf die Patenterteilung: **04.11.2015**
(21) Anmeldenummer: 12005750.0
(22) Anmeldetag: 08.08.2012
(51) Int. Cl.: B01L 1/02, G03B 21/10, G03B 21/14, G03B 21/28, G03B 29/00, B08B 15/02, B01L 9/02, G03B 21/00

(54) **Laborabzug, insbesondere Sicherheitswerkbank, mit Projektionsvorrichtung**
Laboratory fume hood, in particular safety workbench, with a projection device
Hotte de laboratoire, notamment établi de sécurité, avec dispositif de projection

(30) Priorität: 29.08.2011 DE 102011111949
(43) Veröffentlichungstag der Anmeldung: 06.03.2013
(73) Patentinhaber: Thermo Electron LED GmbH, 63505 Langenselbold (DE)
(72) Erfinder: Brömsen, Olaf, 64546 Mörfelden (DE); Noll, Christoph, 63584 Gründau (DE); Frickel, Edmund, 63584 Gründau (DE); Rupp, Oliver, 35398 Gießen (DE)
(74) Vertreter: Tomerius, Isabel

(56) Entgegenhaltungen:
- WO-A2-2005/025199
- DE-A1-102007 055 204
- JP-A- 2000 296 481

## Beschreibung

Die Erfindung betrifft einen Laborabzug und insbesondere eine Sicherheitswerkbank mit einem von einem Gehäuse umgebenen Arbeitsraum, der mit einer Frontscheibe verschließbar ist und in dem geschützt Proben bearbeitet werden können. Laborabzüge und Sicherheitswerkbänke unterscheiden sich nach dem Schutz, den sie bieten können. Abhängig von dem gebotenen Schutz für den Benutzer und die bearbeiteten Proben sind Sicherheitswerkbänke zur Zeit in drei Klassen unterteilt. Vorschriften hierzu finden sich in den Normen DIN EN 12469:2000 und DIN 12980:2005. Die Erfindung betrifft sämtliche solcher Geräte, also sowohl einfache Laborabzüge, Reinraumwerkbänke als auch Sicherheitswerkbänke der Klasse I bis III. Nachfolgend wird zusammenfassend für alle diese Gerätetypen von Laborabzügen gesprochen. Ein solcher Laborabzug ist beispielsweise in der japanischen Patentveröffentlichung JP 2000 296481 A beschrieben.

Für die Gewährleistung des nötigen Schutzes ist in allen Fällen von Laborabzügen die Einhaltung einer bestimmten Luftströmung erforderlich. Im Falle von Sicherheitswerkbänken der Klasse II beispielsweise wird ein Großteil des im Arbeitsraum zirkulierenden Luftstroms in einer vertikalen laminaren Fallströmung von oben nach unten geführt. Diese Fallströmung kann durch Einbauten im Arbeitsraum empfindlich gestört werden. Aus diesem Grund machen Einbauten im Arbeitsinnenraum wie beispielsweise an der Arbeitsraumrückwand angebrachte Bildschirme eine gesonderte Typprüfung erforderlich, damit die geforderte Sicherheit gewährleistet ist. Diese Bildschirme, die zum Beispiel zur Anzeige von Geräteinformationen dienen, führen außerdem zu Druckverlusten im Rückluftkanal. Zudem können mit ihnen unerwünschte Schmutzpartikel in den Arbeitsinnenraum gelangen, und die Reinigung des Arbeitsinnenraumes wird durch die Anwesenheit des Bildschirmes erschwert.

Aufgabe der Erfindung ist es entsprechend, einen Laborabzug und insbesondere eine Sicherheitswerkbank anzugeben, die die Anzeige von Informationen im Arbeitsinnenraum ermöglichen, ohne dass dies zu den oben genannten Nachteilen führt, also insbesondere eine Beeinträchtigung der Luftzirkulation im Arbeitsraum vermieden und eine leichtere Reinigung ermöglicht wird.

Die Lösung dieser Aufgabe gelingt mit dem Laborabzug, speziell einer Sicherheitswerkbank, wie sie in Anspruch 1 beschrieben ist. Bevorzugte Ausführungsformen sind den Unteransprüchen zu entnehmen.

In ihrem breitesten Aspekt betrifft die Erfindung also einen Laborabzug und insbesondere eine Sicherheitswerkbank mit einem von einem Gehäuse umgebenen Arbeitsraum, der mit einer, insbesondere beweglichen, Frontscheibe verschließbar ist. Insofern unterscheidet sich das Gerät also nicht von den bisher bekannten Geräten. Im Unterschied zu letzteren weist es jedoch eine Projektionsvorrichtung auf, um ein Bild in den Arbeitsraum zu projizieren. Die Verwendung der Projektionsvorrichtung und in den Arbeitraum projizierter Bilder erlaubt es, auf eine Bildanzeigevorrichtung im Inneren des Arbeitsraumes zu verzichten. Damit entfallen jedoch auch deren vorstehend beschriebene Nachteile. Im erfindungsgemäßen Laborabzug ist also keine Anzeigevorrichtung wie ein Monitor vorhanden, welcher die Luftströmung im Arbeitsraum beeinträchtigen oder eine Reinigung erschweren könnten. Die Projektionsvorrichtung ist außerhalb des Arbeitsraums angeordnet und projiziert Bilder in den Arbeitsraum hinein.

Im Sinne der Erfindung bezeichnet der Ausdruck "Laborabzug", wie erwähnt, jegliche Art eines Laborabzugs - also auch jegliche Art von Sicherheitswerkbank, wie solche der Klassen I bis III, sowie Reinraum- oder Produktschutzwerkbänke wie beispielsweise Impfbänke. Alle diese Geräte können ohne Weiteres im Rahmen der Erfindung eingesetzt werden, da das Anbringen einer Projektionsvorrichtung außerhalb des Arbeitsraumes in allen Fällen ohne Schwierigkeiten möglich ist.

Bei der erfindungsgemäß einsetzbaren Projektionsvorrichtung kann es sich um jede Art von Projektionsvorrichtung handeln, die geeignet ist, ein Bild von außen in den Arbeitsraum hinein zu projizieren. Beispiele geeigneter Projektionsvorrichtungen sind herkömmliche Diaprojektoren oder Video-Beamer. Ebenso gut ist es möglich, einen Projektor einzusetzen, mit welchem ein Display eines elektronischen Gerätes wie beispielsweise eines Computers oder Mobiltelefons abgebildet werden kann. Beispielhaft für diesen Typ einer Projektionsvorrichtung können solche Projektoren genannt werden, die ein teiltransparentes LCD-Display oder reflektierendes Mikrodisplay wie ein LCOS (*liquid crystal on silicon*) abbilden können. Ebenfalls geeignet sind scannende Projektoren wie Laser-Projektionsvorrichtungen.

Derartige Projektionsvorrichtungen werden häufig in Kombination mit einer Projektionsoptik eingesetzt. Diese weist beispielsweise wenigstens einen Umlenkspiegel und/oder wenigstens eine Linse auf. Der wenigstens eine Umlenkspiegel dient dazu, den von der Projektionsvorrichtung ausgestrahlten Lichtstrahl in eine andere Richtung abzulenken und erlaubt so beispielsweise die Anordnung der Projektionsvorrichtung seitlich der Projektionsfläche und damit in einem Bereich, in dem die Projektionsvorrichtung den Benutzer des Laborabzuges möglichst wenig beeinträchtigt. Selbstverständlich ist es jedoch ebenfalls möglich, die Projektionsvorrichtung so anzuordnen, dass der Lichtstrahl direkt und ohne Umlenkung auf die Projektionsfläche ausgestrahlt wird. Die wenigstens eine Linse der Projektionsoptik dient beispielsweise der Einstellung der Schärfe und Größe des abgebildeten Bildes oder der Vergleichmäßigung der Abbildung. Zusätzlich zu den genannten Elementen kann die Projektionsoptik in an sich bekannter Weise weitere Komponenten zur Verbesserung der Abbildungsqualität umfassen. Auch elektronische Bildkorrekturverfahren (Keystone-Korrektur o. ä.), Verfahren zur Anpassung der Helligkeit in Abhängigkeit von der Umgebungshelligkeit usw. können eingesetzt werden.

Grundsätzlich kann die Abbildung an jeder geeigneten Stelle des Arbeitsraumes erfolgen. Naturgemäß sind solche Bereiche bevorzugt, die für den Benutzer besonders gut einsehbar sind. Bevorzugt ist daher die Projektion des Bildes auf die der Frontscheibe gegenüber liegende Rückwand des Arbeitsraumes. Es ist jedoch auch eine Abbildung auf einer der Seitenwände des Arbeitsraumes oder auch auf der Arbeitsfläche möglich, wobei in letzterem Fall die Bereiche der Arbeitsfläche bevorzugt sind, die außerhalb der Hauptarbeits- und -abstellflächen liegen.
Alternativ ist es möglich, bestimmte Bereiche auf der Arbeitsfläche optisch einzugrenzen, um auf diese Weise bestimmte Arbeitsabläufe für den Benutzer vorzugeben und so deren Einhaltung zu vereinfachen. Positionell und gegebenenfalls auch farblich voneinander verschiedene Projektionen können dabei zum Beispiel durch Verwendung geeigneter Blenden erreicht werden. Gleichzeitig können mit den verschiedenen Arbeitsbereichen auch die zugehörigen Arbeitsvorschriften - entweder im Arbeitsbereich selbst oder bevorzugt in einem benachbarten Bereich - abgebildet werden. Auf diese Weise ist es möglich, den Benutzer Schritt für Schritt durch die einzelnen Arbeitsschritte einer Arbeitsvorschrift zu leiten, wobei bevorzugt jeder Schritt einem speziellen Arbeitsbereich zugeordnet ist, und so die Verfahrenssicherheit zu erhöhen.

Zur Erhöhung der Informationsdichte können auch Bilder aus mehreren Datenquellen gleichzeitig projiziert werden (sogenannte Bild-in-Bild-Projektion oder Bild-neben-Bild-Projektion). Noch weiter erhöht werden kann der Informationsgehalt, wenn anstelle einer Projektionsvorrichtung mehrere Projektionsvorrichtungen eingesetzt werden. Zweckmäßig handelt es sich dabei in allen Fällen um Projektionsvorrichtungen, die außerhalb des Arbeitsraumes angeordnet sind und Bilder in den Arbeitsraum hinein projizieren. Die von den verschiedenen Projektionsvorrichtungen projizierten Bilder können dabei entweder in an sich bekannterweise überblendet oder nebeneinander angezeigt werden.

Grundsätzlich ist es möglich, die Bilder unmittelbar auf im Arbeitsraum vorhandene Flächen zu projizieren. Sollte die Abbildungsqualität dabei allerdings nicht ausreichend sein, ist es ebenfalls möglich, die Projektionsfläche zu modifizieren. Bevorzugt ist hier eine Oberflächenmodifikation zur Verbesserung der Abbildungsqualität, die beispielsweise durch einen Anstrich oder das Aufbringen einer Folie erreicht werden kann. Derartige Folien sind beispielsweise von Projektionsleinwänden bekannt. Der Vorteil einer solchen Maßnahme besteht darin, dass nur ein sehr geringer Materialzuwachs entsteht, der zu keiner Beeinträchtigung der Luftströmung innerhalb des Arbeitsraumes führt. Alternativ ist es jedoch ebenfalls möglich, die Projektionsfläche als separate Komponente in den Arbeitsraum einzuführen und sie an geeigneter Stelle im Arbeitsraum zu befestigen oder aufzustellen. Die Befestigung geschieht dabei zweckmäßig derart, dass die Projektionsfläche leicht aus dem Arbeitsraum wieder entnommen werden kann, damit sie die Reinigung des Arbeitsinnenraumes nicht erschwert. Zudem wird die Projektionsfläche zweckmäßig so positioniert, dass sie weder den Benutzer bei seiner Arbeit beeinträchtigt noch die Luftströmung innerhalb des Arbeitsraumes stört.

In einer weiteren Variante kann die Projektionsfläche in einer Glasplatte bestehen, auf die ähnlich wie bei einem Head-up-Display eines Flugzeuges oder Kraftfahrzeuges ein Bild projiziert wird. Bei der Glasplatte kann es sich entweder um eine bereits im Laborabzug vorhandene Glasfläche handeln, also zum Beispiel eine der gläsernen Seitenwände oder auch die Frontscheibe des Laborabzugs. Diese zählen im Sinne der Erfindung ebenfalls zum Inneren des Arbeitsraumes, da auf sie projizierte Bilder im Arbeitsraum für den Benutzer erkennbar sind. Alternativ ist es möglich, in die Rückwand des Arbeitsraumes eine Glasplatte - bevorzugt flächenbündig mit der Rückwand - zu integrieren. Die Projektion auf diese Glasplatte geschieht dann von außen auf die vom Inneren des Arbeitsraumes abgewandte Oberfläche der Glasplatte, kann aber durch die Glasplatte hindurch betrachtet werden. Anstelle der Integration in die Rückwand kann die Glasplatte auch in eine andere den Arbeitsraum begrenzende Wand oder die Arbeitsplatte eingefügt werden. Auch hier erfolgt die Integration bevorzugt flächenbündig zu den den Arbeitsraum begrenzenden Flächen, um die Luftströmung nicht zu behindern und die Reinigung zu erleichtern.

Die wenigstens eine Projektionsvorrichtung, die in Zusammenhang mit dem erfindungsgemäßen Laborabzug verwendet wird, kann entweder fest außerhalb des Arbeitsraumes an dem Laborabzug montiert sein, oder, bevorzugt, ist am Laborabzug eine Halterung vorgesehen, in welcher die Projektionsvorrichtung abnehmbar befestigt werden kann. Zweckmäßig weist die Halterung in diesem Fall auch die nötigen Steckverbindungen auf, um die Projektionsvorrichtung mit den vorgesehenen Strom- und Datenkabeln zu verbinden. Die Halterung sorgt zweckmäßig ebenfalls dafür, dass die Projektionsvorrichtung in der richtigen Ausrichtung zum Arbeitsraum hin positioniert wird.

Mit der Projektionsvorrichtung können prinzipiell alle Informationen angezeigt werden, die für den Benutzer des Laborabzugs interessant sind. Welche Informationen gerade angezeigt werden, kann entweder durch die Steuerung des Laborabzugs fest vorgegeben sein und/oder der Benutzer kann selbst auswählen, welche Informationen er gerade angezeigt bekommen möchte. Sinnvoll kann es beispielsweise sein, für den Betrieb des Laborabzugs wesentliche Informationen dauerhaft anzuzeigen oder Warnhinweise einzublenden, wenn der Betrieb des Gerätes gestört ist. Gleichzeitig kann es sinnvoll sein, dem Benutzer Hinweise einzublenden, was in der jeweiligen Störsituation zweckmäßig zu tun ist. Bevorzugt ist es weiterhin, dem Benutzer die Möglichkeit zu geben, in der Betriebsanleitung des Geräts nach Informationen zu suchen und diese mit der Projektionsvorrichtung im Arbeitsraum anzeigen zu lassen.

Die abrufbare Information kann zum Beispiel entweder in einem dafür vorgesehenen Speicher des Gerätes selbst hinterlegt sein oder sie ist in einem externen Speichermedium abgespeichert, das über eine Datenverbindung mit der Projektionsvorrichtung des Laborabzuges verbunden ist. Bei der Datenleitung kann es sich um eine kabelgebundene oder kabellose Verbindung handeln. Die kabellose Datenübermittlung, beispielsweise über ein WLAN-Netz, ist grundsätzlich bekannt und muss hier nicht näher beschrieben werden. Als externes Speichermedium ist beispielsweise ein Computer, worunter auch ein tragbarer PC wie ein Notebook, Tablet-PC usw. zu verstehen ist, ein Mobiltelefon, ein USB-Stick oder eine Speicherkarte geeignet. Zum Auslesen der letzteren beiden Speichermedien kann beispielsweise an der Projektionsvorrichtung ein geeigneter Datenanschluss wie eine USB-Schnittstelle vorgesehen sein. Die Auswahl der von der Projektionsvorrichtung anzuzeigenden Daten erfolgt in den ersteren beiden Fällen zweckmäßig über das externe Gerät, also den Computer oder das Mobiltelefon. In letzteren beiden Fällen wird die Auswahl bevorzugt über eine Bedienvorrichtung des Laborabzugs vorgenommen.

Besonders bevorzugt handelt es sich bei der Bedienvorrichtung dabei um eine Fernbedienung, die der Benutzer in den Arbeitsraum mit hinein nehmen kann. Eine solche Fernbedienung ist beispielsweise aus der EP 1 354 643 A2 der Anmelderin bekannt. Sie eignet sich unabhängig von der Art der anzuzeigenden Information und deren Herkunft zur Auswahl durch den Benutzer. Alternativ zu der Fernbedienung kann die Auswahl über eine fest mit dem Laborabzug verbundene Bedienenheit erfolgen. Neben der Auswahl der Art der Information kann es zweckmäßig ebenfalls vorgesehen sein, die Art der Anzeige - also beispielsweise Art der Darstellung (Farbe, Schwarz/Weiß), Position der Abbildung, Layout usw. - durch den Benutzer auswählen zu lassen.

Eine weitere Möglichkeit, dem Benutzer die Bedienung des Laborabzugs und der angeschlossenen Geräte zu ermöglichen, besteht darin, mit der Projektionsvorrichtung auf die Projektionsfläche ein virtuelles Bedienpaneel, beispielsweise in Form einer Tastatur, zu projizieren. Der Benutzer verwendet das projizierte virtuelle Bedienpaneel wie ein reales, indem er mit seinen Fingern auf die projizierten Tasten drückt. Die Ermittlung der Fingerbewegungen des Benutzers erfolgt dabei in an sich bekannter Weise, zum Beispiel dadurch, dass Laser- oder Infrarotstrahlung in den Bereich der Projektionsfläche ausgestrahlt und die Änderung des reflektierten Lichts aufgrund der Störung durch die Finger des Benutzers in bestimmten Bereichen der Tastatur ermittelt wird. Die Verwendung des projizierten Bedienpaneels ist vielfältig, da die Art des Bedienpaneels, die Tastaturbelegung usw. beispielsweise in Abhängigkeit von der Menüebene der Steuerung des Laborabzugs oder der Stufe eines Arbeitsablaufes, der gerade vom Benutzer ausgeführt wird, geändert werden kann. Je nachdem, was der Benutzer gerade tut, kann also ein angepasstes Bedienpaneel in den Arbeitsraum projiziert werden. So ist es möglich, das Bedienpaneel für den Benutzer stets sehr einfach und übersichtlich zu gestalten. Die Verwendung eines derartigen projizierten Bedienpaneels hat zudem den Vorteil, dass der Benutzer die Sicherheitswerkbank bedienen kann, ohne mit seinen Händen den Arbeitsraum verlassen zu müssen und ohne dass ein reales Bedienpaneel in den Arbeitsraum hinein gestellt werden muss, welches dort verunreinigt werden kann.

Zu den weiteren Informationen, die mit der Projektionsvorrichtung eingeblendet werden können, gehören beispielsweise allgemeine Information wie die Uhrzeit, überwachte Verfahrensparameter und Betriebsabläufe oder auch Arbeitsanweisungen. Bevorzugt kann der Benutzer die einzelnen Schritte eines Herstellungs- oder Analyseverfahrens entweder insgesamt oder in Abhängigkeit vom Arbeitsfortschritt nach und nach einblenden. Die Arbeit kann weiter dadurch erleichtert werden, dass dem Benutzer Daten von Analysengeräten und/oder Messvorrichtungen angezeigt werden. Dabei kann es sich insbesondere um Daten solcher Geräte handeln, die im Arbeitsraum angeordnet sind, also beispielsweise Waagen, Mikroskope oder ähnliches. Es können jedoch ganz generell auch Daten von Geräten übermittelt und angezeigt werden, die sich außerhalb des Laborabzugs befinden. Die Datenübertragung kann dabei erneut kabelgebunden oder kabellos erfolgen. Auf diese Weise ist es dem Benutzer des Laborabzugs beispielsweise möglich, parallel ablaufende Arbeitsvorgänge zu kontrollieren und im Blick zu behalten.

"Im Blick zu behalten" ist dabei durchaus auch wörtlich zu verstehen. So ist es ebenfalls möglich, von einer Kamera aufgenommenes und an die Projektionsvorrichtung übertragendes Bildmaterial in den Arbeitsraum zu übertragen. Die Kamera kann sich dabei sowohl im Arbeitsraum als auch außerhalb desselben, am Laborabzug oder entfernt von diesem, befinden. In einer ersten Variante beispielsweise dient eine Kamera dazu, Abläufe, die innerhalb des Arbeitsraums des Laborabzugs stattfinden, zu filmen. Möglich ist es zum Beispiel, dass der Benutzer die von ihm verrichteten Arbeiten innerhalb des Arbeitsraumes aufnimmt, um sie sich gegebenenfalls in vergrößerter Form und daher für ihn besser erkennbar in den Arbeitsraum projizieren zu lassen. Das so erhaltene Bildmaterial kann zudem abgespeichert und archiviert werden, um als Dokumentation der Arbeitsabläufe zu dienen. Die Kamera kann dabei innerhalb des Arbeitsraumes angeordnet sein oder, bevorzugt, außerhalb des Arbeitsraumes, beispielsweise durch eine den Arbeitsraum abschließende Glasscheibe hindurch sehend.
In einer zweiten Variante überträgt die Kamera Bilder aus der Umgebung des Laborabzugs. Auf diese Weise behält der Benutzer des Laborabzugs sein Umfeld im Blick, ohne die Arbeit dabei unterbrechen zu müssen.
In einer dritten Variante überträgt eine Kamera Bilder aus Bereichen, die für den Benutzer des Laborabzugs gar nicht wahrzunehmen wären, ohne dass er seinen Arbeitsplatz verlässt. Dabei kann es sich beispielsweise um Bilder aus Nachbarräumen handeln, in denen Versuche ablaufen, die der Benutzer des Laborabzugs auf diese Weise überwachen kann. Wie bereits erwähnt, können zusätzlich auch Messwerte solcher Versuche in den Arbeitsraum des Laborabzugs projiziert werden. Auch die Verwendung mehrerer Kameras ist selbstverständlich möglich.

Die Erfindung soll nachfolgend anhand von Zeichnungen näher erläutert werden. In den Figuren, in denen gleiche Bezugszeichen gleiche Teile bezeichnen, zeigen schematisch:
- Fig. 1: einen Querschnitt durch einen erfindungsgemäßen Laborabzug am Beispiel einer Sicherheitswerk der Klasse II und
- Fig. 2: die Draufsicht auf ein weiteres Ausführungsbeispiel einer erfindungsgemäßen Sicherheitswerkbank.

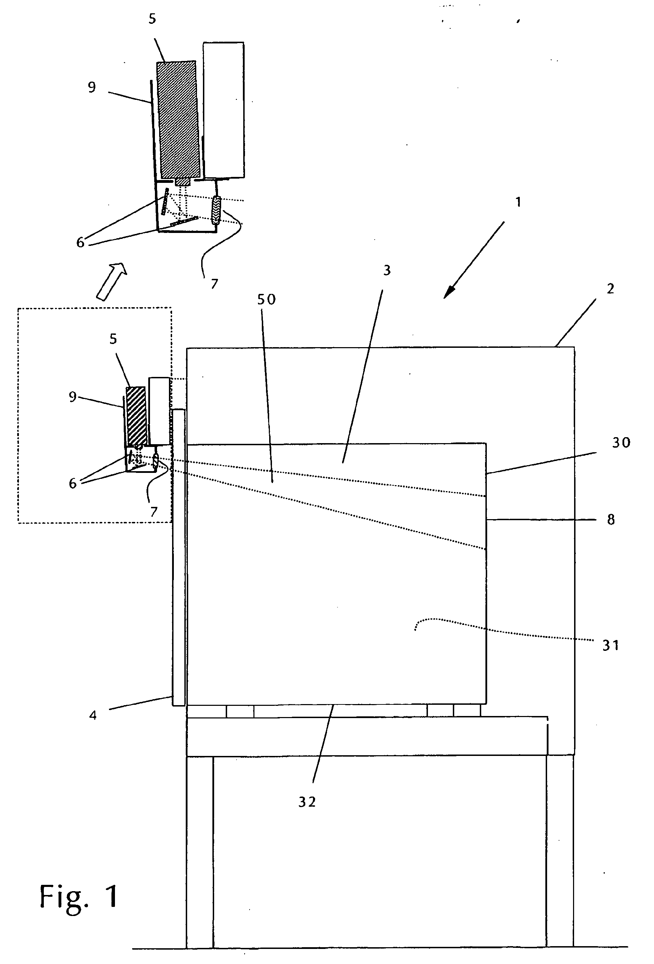

Figur 1 zeigt den Querschnitt einer Sicherheitswerkbank der Klasse II, die in ihrem Grundaufbau einer herkömmlichen Sicherheitswerkbank entspricht. Zur sicheren Bearbeitung von Proben weist die Sicherheitswerkbank 1 einen Arbeitsraum 3 auf, der von einem Gehäuse 2 umgeben wird. Auf der Frontseite ist der Arbeitsraum 3 mit einer nach oben und unten verschiebbaren Frontscheibe 4 verschließbar. Von einer herkömmlichen Sicherheitswerkbank unterscheidet sich die erfindungsgemäße dadurch, dass sie eine Projektionsvorrichtung 5 aufweist, mit der Bilder von außen in den Arbeitsraum hinein projiziert werden können. Im gezeigten Fall ist die Projektionsvorrichtung 5 mit einer Halterung 9 am Gehäuse 2 der Sicherheitswerkbank 1 befestigt - und zwar hier an der Gehäusefrontseite, größtenteils oberhalb der Arbeitsöffnung, die Zugang zum Arbeitsraum 3 gewährt. Bei der Projektionsvorrichtung 5 handelt es sich beispielsweise um einen Video-Beamer, der über eine kabelgebundene oder kabellose Datenverbindung - hier nicht dargestellt - Daten von einem externen Gerät, beispielsweise einem Computer, und/oder der Steuereinheit der Sicherheitswerkbank 1 übertragen erhält. Die in Bilder umgesetzten Daten projiziert der Projektor auf eine Projektionsfläche 8, die sich hier im oberen Bereich der Rückwand 30 befindet, die den Arbeitsraum 3 begrenzt. Der vom Projektor 5 ausgesendete Lichtstrahl 50 wird dabei von zwei Umlenkspiegeln 6 in Richtung auf die Rückwand 30 umgelenkt und über eine Linse 7 ausgestrahlt, die zur Verbesserung der Bildqualität auf der Projektionsfläche 8 dient (vergleiche auch die Ausschnittvergrößerung des gestrichelten Bereiches). Die Bildqualität kann außerdem dadurch verbessert werden, dass im Bereich der Projektionsfläche 8 die Rückwand 30 oberflächenbehandelt, beispielsweise beschichtet, wird.

In einer alternativen, hier nicht dargestellten, Ausführungsform ist es ebenso gut möglich, die Projektionsfläche 8 zur Darstellung der vom Projektor übermittelten Bilddaten in einen Bereich der Arbeitsplatte 32 oder einer der Seitenwände 31, die den Arbeitsraum 3 begrenzen, anzuordnen. Möglich ist auch die Verwendung mehrerer Projektionsvorrichtungen 5, die gleichzeitig oder nacheinander unterschiedliches Bildmaterial projizieren.

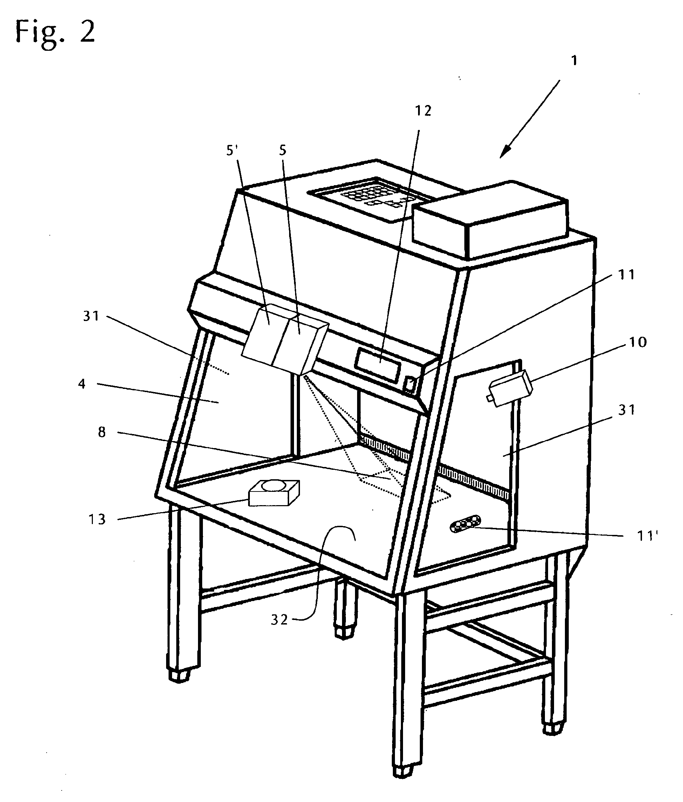

Eine solche Möglichkeit mit mehreren Projektionsvorrichtungen ist in Figur 2 dargestellt. Auch hier handelt es sich bei der Sicherheitswerkbank 1 um eine solche, deren Grundaufbau dem des Standes der Technik entspricht. Anstelle der einen Projektionsvorrichtung in Figur 1 sind hier nun zwei Projektionsvorrichtungen 5 und 5' an der Frontseite des Gehäuses 2 oberhalb der Arbeitsöffnung zum Arbeitsraum 3 angeordnet. Diese Projektionsvorrichtungen 5 und 5' können gleichzeitig oder nacheinander Bildmaterial in das Innere des Arbeitsraumes 3 hinein projizieren. Gezeigt ist hier ein Fall, in dem sich eine Projektionsfläche 8 im hinteren Bereich der Arbeitsplatte 32 der Sicherheitswerkbank 1 befindet. Halterung 9 und Projektionsoptiken aus Umlenkspiegeln und Linsen sind hier zur Vereinfachung der Darstellung weggelassen, können aber grundsätzlich wie in Figur 1 dargestellt ausgebildet sein.

Die gleichzeitige Verwendung der Projektionsvorrichtungen 5 und 5' erlaubt beispielsweise die parallele Darstellung verschiedener Informationen aus unterschiedlichen Datenquellen auf der Projektionsfläche 8. Selbstverständlich ist es aber auch möglich, für jede der Projektionsvorrichtungen getrennte Projektionsflächen in unterschiedlichen Bereichen des Arbeitsraumes 3 vorzusehen. Die Auswahl der dargestellten Information ist praktisch beliebig. Rein beispielhaft sei hier nochmals auf die Darstellung von Bedienungsanleitungen, Arbeitsvorschriften, Geräteparametern der Sicherheitswerkbank 1, Analysendaten oder Messparametern, allgemeinen Informationen wie Uhrzeit usw. hingewiesen. Im gezeigten Fall befindet sich beispielsweise im Arbeitsraum 3 eine Waage 13, die über eine kabellose oder kabelgebundene Datenverbindung mit einer der Projektionsvorrichtungen, hier der Projektionsvorrichtung 5, verbunden ist. Auf diese Weise lassen sich Wägeergebnisse von der Waage 13 über die Projektionsvorrichtung 5 auf der Projektionsfläche 8 als Bild darstellen.

Zusätzlich ist außerhalb der Sicherheitswerkbank 1 eine Kamera 10 angeordnet, die durch eine gläserne Seitenwand 31 hindurch in den Arbeitsraum 3 hinein filmen kann. Dies ermöglicht es dem Benutzer, seine eigenen Arbeiten, vorzugsweise vergrößert, über eine der Projektionsvorrichtungen - hier beispielsweise die Projektionsvorrichtung 5', die über eine kabellose oder kabelgebundene Datenverbindung mit der Kamera 10 verbunden ist - auf der Projektionsfläche 8 anzeigen zu lassen und zu betrachten.

Zur Bedienung der Sicherheitswerkbank 1 sind hier zwei Bedienvorrichtungen 11 und 11' vorhanden, die vom Benutzer wahlweise eingesetzt werden können. Bei der Bedienvorrichtung 11 handelt es sich um einen Wippentaster, wie er in der DE 102 17 903 C1 beschrieben ist. Das Steuerungs- und Auswahlmenü wird im Display 12 angezeigt. Zusätzlich ist eine Fernbedienung 11' vorhanden, wie sie beispielsweise aus der EP 1 354 643 A2 bekannt ist. Die Bedienmenüs der Bedienungsvorrichtungen 11 und 11' und die Steuerung der Sicherheitswerkbank 1 sind hier so eingerichtet, dass der Benutzer über die Bedienvorrichtungen 11 und 11' auswählen kann, welche Informationen ihm von den Projektionsvorrichtungen 5 und 5' angezeigt werden. Zusätzlich kann vorgesehen sein, dass der Benutzer über die Bedienvorrichtungen 11 und 11' auswählen kann, in welcher Form ihm das Bildmaterial von den Projektionsvorrichtungen 5 und 5' dargestellt wird.

Eine weitere Möglichkeit der Bedienung ergibt sich für den Benutzer aus der Möglichkeit, mit einer der Projektionsvorrichtungen 5 oder 5' auf die Projektionsfläche 8 ein Bedienpaneel, beispielsweise in Form einer Tastatur, zu projizieren. Die Ermittlung der Fingerbewegungen des Benutzers auf der Tastatur erfolgt dabei in an sich bekannter Weise, zum Beispiel dadurch, dass Laser- oder Infrarotstrahlung in den Bereich der Projektionsfläche ausgestrahlt und die Änderung des reflektierten Lichts aufgrund der Störung durch die Finger des Benutzers in bestimmten Bereichen der Tastatur ermittelt wird. Die Verwendung eines derartigen projizierten Bedienpaneels hat den Vorteil, dass der Benutzer die Sicherheitswerkbank bedienen kann, ohne mit seinen Händen den Arbeitsraum 3 verlassen zu müssen und ohne dass ein tatsächliches Bedienpaneel in den Arbeitsraum 3 hinein gestellt werden muss, welches dort verunreinigt werden kann.

## Patentansprüche

1. Laborabzug, insbesondere Sicherheitswerkbank (1), mit einem von einem Gehäuse (2) umgebenen Arbeitsraum (3), der mit einer, insbesondere beweglichen, Frontscheibe (4) verschließbar ist,
**dadurch gekennzeichnet,**
**dass** er eine außerhalb des Arbeitsraumes (3) angeordnete Projektionsvorrichtung (5) aufweist, um ein Bild in den Arbeitsraum (3) zu projizieren.

2. Laborabzug nach Anspruch 1,
**dadurch gekennzeichnet,**
**dass** die Projektionsvorrichtung (5) ein Diaprojektor, Video-Beamer, ein Projektor zur Abbildung eines Displays eines elektrischen Geräts, insbesondere eines Computers oder Mobiltelefons, bevorzugt eines teiltransparenten LCD-Displays oder reflektierenden Mikrodisplays wie eines LCOS, oder eine Laser-Projektionsvorrichtung ist.

3. Laborabzug nach einem der Ansprüche 1 oder 2,
**dadurch gekennzeichnet,**
**dass** die Projektionsvorrichtung (5) eine Projektionsoptik umfasst, die bevorzugt wenigstens einen Umlenkspiegel (6) und/oder wenigstens eine Linse (7) aufweist.

4. Laborabzug nach einem der Ansprüche 1 bis 3,
**dadurch gekennzeichnet,**
**dass** die Projektionsvorrichtung (5) so angeordnet ist, dass das Bild auf eine der Frontscheibe (4) gegenüber liegende Rückwand (30), eine Seitenwand (31) oder die Arbeitsplatte (32) des Arbeitsraums (3) projiziert wird.

5. Laborabzug nach einem der Ansprüche 1 bis 4,
**dadurch gekennzeichnet,**
**dass** die der Abbildung dienende Projektionsfläche (8) zur Verbesserung der Abbildungsqualität oberflächenmodifiziert ist.

6. Laborabzug nach einem der Ansprüche 1 bis 5,
**dadurch gekennzeichnet,**
**dass** mehrere Projektionsvorrichtungen (5, 5') zur Projektion von Bildern in den Arbeitsraum (3) vorhanden sind.

7. Laborabzug nach einem der Ansprüche 1 bis 6,
**dadurch gekennzeichnet,**
**dass** die wenigstens eine Projektionsvorrichtung (5, 5') abnehmbar an einer Halterung (9) des Laborabzugs an diesem befestigt ist.

8. Laborabzug nach einem der Ansprüche 1 bis 7,
**dadurch gekennzeichnet,**
**dass** wenigstens eine Kamera (10) vorhanden ist, die Bildmaterial, insbesondere aus dem Arbeitsraum (3) und/oder der Umgebung des Laborabzugs, aufnimmt und an die wenigstens eine Projektionsvorrichtung (5, 5') überträgt.

9. Laborabzug nach einem der Ansprüche 1 bis 8,
**dadurch gekennzeichnet,**
**dass** die von der wenigstens einen Projektionsvorrichtung (5, 5') übertragenden Bilder wenigstens eine der folgenden Informationen abbilden:
- eine Bedienungsanleitung,
- eine Arbeitsanweisung,
- Daten über den Betriebszustand des Laborabzugs,
- Daten von Analysengeräten und/oder Messvorrichtungen, insbesondere solchen, die im Arbeitsraum (3) angeordnet sind,
- von einer Kamera (10) übertragendes Bildmaterial,
- auf einem externen Speichermedium, insbesondere einem Computer, Mobiltelefon, USB-Stick oder einer Speicherkarte, gespeicherte Daten,
- ein Bedienpaneel, insbesondere eine Tastatur.

10. Laborabzug nach einem der Ansprüche 1 bis 9,
**dadurch gekennzeichnet,**
**dass** eine Bedienvorrichtung (11, 11') vorhanden ist, mit der ein Benutzer für zumindest einen Teil der Information deren Abbildung nach Wunsch auswählen kann.

## Claims

1. A laboratory fume hood, in particular a safety cabinet (1), comprising a working space (3) which is enclosed by a housing (2) and which is closable by a front window (4) which is in particular movable,
**characterized in that**
it comprises a projection apparatus (5) arranged outside the working space (3) for projecting an image into the working space (3).

2. The laboratory fume hood according to claim 1,
**characterized in that**
the projection apparatus (5) is a slide projector, a video beamer, a projector for projecting a display of an electrical device, in particular a computer or a mobile phone, preferably a partially transparent LCD display or reflective microdisplay such as an LCOS, or a laser projection apparatus.

3. The laboratory fume hood according to any one of claims 1 or 2,
**characterized in that**
the projection apparatus (5) comprises an optical projection system which preferably has at least one reflecting mirror (6) and/or at least one lens (7).

4. The laboratory fume hood according to any one of claims 1 to 3,
**characterized in that**
the projection apparatus (5) is arranged in such a way that the image is projected onto a rear wall (30) disposed opposite of the front window (4), a side wall (31) or the worktop (32) of the working space (3).

5. The laboratory fume hood according to any one of claims 1 to 4,
**characterized in that**
the projection area (8) used for projection is surface-modified for improving the quality of the projection.

6. The laboratory fume hood according to any one of claims 1 to 5,
**characterized in that**
multiple projection apparatuses (5, 5') are provided for the projection of images into the working space (3).

7. The laboratory fume hood according to any one of claims 1 to 6,
**characterized in that**
the at least one projection apparatus (5, 5') is detachably fastened to a holder (9) of the laboratory fume hood.

8. The laboratory fume hood according to any one of claims 1 to 7,
**characterized in that**
at least one camera (10) is provided which records image material, in particular from the working space (3) and/or the surroundings of the laboratory fume hood, and transmits said material to the at least one projection apparatus (5, 5').

9. The laboratory fume hood according to any one of claims 1 to 8,
**characterized in that**
the images transmitted by the at least one projection apparatus (5, 5') project at least one of the following pieces of information:
- an operating instruction;
- a job instruction;
- data on the operating state of the laboratory fume hood;
- data from analytical devices and/or measuring apparatuses, especially such which are arranged in the working space (3);
- image material transmitted by a camera (10);
- data stored on an external storage medium, in particular a computer, mobile phone, USB stick or a memory card;
- a control panel, in particular a keyboard.

10. The laboratory fume hood according to any one of claims 1 to 9,
**characterized in that**
a control apparatus (11, 11') is provided with which the user can choose the projection at will for at least a part of the information.

## Revendications

1. Hotte de laboratoire, en particulier enceinte de sécurité (1), comprenant un espace de travail (3), qui est entouré par un capot (2) et qui peut être fermé avec une paroi frontale (4) qui est en particulier mobile,
**caractérisée en ce que**
elle comprend un appareil de projection (5) installé à l'extérieur de l'espace de travail (3) destiné à projeter une image sur l'espace de travail (3).

2. Hotte de laboratoire selon la revendication 1,
**caractérisée en ce que**
l'appareil de projection (5) est un projecteur de diapositives, un vidéo-projecteur, un projecteur pour la projection de l'écran d'un appareil électrique, en particulier d'un ordinateur ou d'un téléphone mobile, de manière préférée un écran LCD partiellement transparent ou un micro-affichage réfléchissant tel qu'un LCOS, ou un appareil de projection laser.

3. Hotte de laboratoire selon l'une quelconque des revendications 1 ou 2,
**caractérisée en ce que**
l'appareil de projection (5) comprend un système de projection optique qui comporte de manière préférée au moins un miroir réfléchissant (6) et/ou au moins une lentille (7).

4. Hotte de laboratoire selon l'une quelconque des revendications 1 à 3,
**caractérisée en ce que**
l'appareil de projection (5) est agencé de telle sorte que l'image soit projetée sur une paroi arrière (30) disposée opposée à la paroi frontale (4), sur une paroi latérale (31) ou sur le plan de travail (32) de l'espace de travail (3).

5. Hotte de laboratoire selon l'une quelconque des revendications 1 à 4,
**caractérisée en ce que**
l'aire de projection (8) utilisée est modifiée en surface pour améliorer la qualité de la projection.

6. Hotte de laboratoire selon l'une quelconque des revendications 1 à 5,
**caractérisée en ce que**
plusieurs appareils de projection (5, 5') sont prévus pour la projection d'images dans l'espace de travail (3).

7. Hotte de laboratoire selon l'une quelconque des revendications 1 à 6,
**caractérisée en ce que**
ledit au moins un appareil de projection (5, 5') est fixé de manière détachable à un support (9) de la hotte de laboratoire.

8. Hotte de laboratoire selon l'une quelconque des revendications 1 à 7,
**caractérisée en ce que**
au moins un appareil (10) de prise de vues qui enregistre des images, en particulier de l'espace de travail (3) et/ou de l'environnement ambiant de la hotte de laboratoire, est prévu et transmet lesdites images audit au moins un appareil de projection (5, 5').

9. Hotte de laboratoire selon l'une quelconque des revendications 1 à 8,
**caractérisée en ce que**
les images transmises par ledit au moins un appareil de projection (5, 5') projettent au moins un des éléments d'information suivants :
- une instruction d'utilisation;
- une consigne de travail;
- des données sur l'état opérationnel de la hotte de laboratoire;
- des données de dispositifs analytiques et/ou d'appareils de mesure, en particulier ceux qui sont présents dans l'espace de travail (3);
- des images transmises par un appareil (10) de prise de vues;
- des données stockées sur un support de stockage externe, en particulier un ordinateur, un téléphone mobile, une clé USB ou une carte-mémoire;
- une console de commande, en particulier un clavier.

10. Hotte de laboratoire selon l'une quelconque des revendications 1 à 9,
**caractérisée en ce que**
un dispositif de commande (11, 11') est présent, avec lequel l'utilisateur peut choisir la projection à volonté pour au moins une partie de l'information.
